# EUROPEAN PATENT APPLICATION

(11) **EP 3 617 483 A1**
(43) Date of publication of application: **04.03.2020**
(21) Application number: 18809571.5
(22) Date of filing: 29.05.2018
(51) Int. Cl.: F02D 19/08, F01N 3/00, F02B 11/00, F02B 23/02, F02D 19/06, F02D 41/02, F02D 43/00

(54) **COMPRESSION IGNITION ENGINE**

(30) Priority: 31.05.2017 JP 2017108734
(71) Applicant: Mazda Motor Corporation, Aki-gun Hiroshima 730-8670 (JP)
(72) Inventor: HITOMI, Mitsuo, Aki-gun Hiroshima 730-8670 (JP); YAMAMOTO, Hiroyuki, Aki-gun Hiroshima 730-8670 (JP); YAMAMOTO, Toshihide, Aki-gun Hiroshima 730-8670 (JP); FUJIMOTO, Hidefumi, Aki-gun Hiroshima 730-8670 (JP)
(74) Representative: Müller-Boré & Partner Patentanwälte PartG mbB
(86) International application number: PCT/JP2018/020467
(87) International publication number: WO 2018/221489

(57) **Abstract**

A compression ignition engine includes: a naphtha injector 19 for supplying naphtha to a combustion chamber 14a; a diesel fuel injector 18 for supplying diesel fuel having a higher boiling point than naphtha; an ignition device 20 for assisting ignition of an air-fuel mixture; and a PCM 10 connected to the naphtha injector 19, the diesel fuel injector 18, and the ignition device 20. When the diesel engine 1 is cold, the PCM 10 supplies only naphtha out of naphtha and diesel fuel, and assists ignition of an air-fuel mixture formed by naphtha.

## Description

### [TECHNICAL FIELD]

The present disclosure relates to a compression ignition engine.

### [BACKGROUND ART]

Patent Document 1 describes a diesel engine. This diesel engine is provided with an exhaust gas purification system using a three-way catalyst for the purpose of omitting a high-cost selective reduction catalyst system. In order to purify an exhaust gas using the three-way catalyst, in the diesel engine, a size of each of injection holes through which diesel fuel is injected into a combustion chamber and an injection pressure are adjusted. This allows the diesel fuel to be diffused throughout the combustion chamber to form an air-fuel mixture at a stoichiometric air-fuel ratio, and the air-fuel mixture to be combusted by compression ignition.

Patent Document 2 describes a diesel engine in which gasoline as a secondary fuel is introduced into an intake passage through a carburetor and diesel fuel is injected into a combustion chamber. Patent Document 2 shows that, as a ratio of the diesel fuel and the gasoline, a rate of the diesel fuel to a total fuel amount is set to 50% or more.

Patent Document 3 describes a diesel engine in which vaporized naphtha is supplied into a combustion chamber through an intake passage, and liquid naphtha is injected into the combustion chamber. Patent Document 3 shows that an amount of naphtha supplied to the combustion chamber through the intake passage is set not to exceed 50% of the total fuel amount.

### CITATION LIST

### PATENT DOCUMENT

Patent Document 1: Japanese Patent No. 5620715
Patent Document 2: United Kingdom Patent No. 714672
Patent Document 3: United Kingdom Patent No. 821725

### SUMMARY OF THE INVENTION

### TECHNICAL PROBLEM

In the diesel engine described in Patent Document 1, the air-fuel mixture at the stoichiometric air-fuel ratio is formed and combusted by diffusing the diesel fuel throughout the combustion chamber. However, since the diesel fuel hardly vaporizes, the diesel engine described in Patent Document 1 has a problem of generating, in the combustion chamber, a portion where the concentration of the fuel is locally increased. When the concentration of fuel is locally increased, soot and a carbon monoxide (CO) are generated in the combustion chamber.

In view of the foregoing background, it is therefore an object of the present disclosure to provide a compression ignition engine capable of reducing the generation of, e.g., soot.

### SOLUTION TO THE PROBLEM

Specifically, the present disclosure relates to a compression ignition engine. This compression ignition engine includes: an engine body having a combustion chamber; a first fuel supply configured to supply first fuel to the combustion chamber; a second fuel supply configured to supply second fuel to the combustion chamber, the second fuel less easily vaporizing than the first fuel, at least one of a pressure or temperature of the second fuel at which compression ignition is initiated being lower than that of the first fuel; an ignition assist device configured to assist ignition of an air-fuel mixture formed by at least one of the first fuel or the second fuel; and a controller configured to output a control signal to each of the first fuel supply, the second fuel supply, and the ignition assist device.

The controller determines whether the engine body is cold and not warmed up yet or has been warmed up, and outputs a control signal to the ignition assist device so that the ignition assist device assists ignition of the air-fuel mixture formed by the first fuel when the engine body is cold.

In this configuration, the compression ignition engine includes the first fuel supply and the second fuel supply. At least one of the first fuel or the second fuel is supplied to the combustion chamber. At least one of the pressure or temperature of the first fuel, at which the compression ignition is initiated, is higher than that of the second fuel, and the first fuel more easily vaporizes than the second fuel. At least one of the pressure or temperature of the second fuel, at which the compression ignition is initiated, is lower than that of the first fuel, and the second fuel less easily vaporizes than the first fuel.

That is, the first fuel is characteristically more likely to vaporize than the second fuel. The first fuel, which is likely to vaporize, forms a homogeneous air-fuel mixture. This can substantially prevent generation of the soot and CO upon the combustion. In contrast, the second fuel is characteristically easier to be compressed and ignited than the first fuel. The second fuel forms an air-fuel mixture having higher ignitability than the first fuel. This can ensure the ignitability of the air-fuel mixture.

Therefore, combining these fuels having different fuel characteristics and taking advantages of their characteristics make it possible to achieve appropriate combustion within a wide operating region of the engine.

When the temperature of the combustion chamber is low in a situation where the engine is cold, the ignitability of the air-fuel mixture is lowered, and the compression ignition may become unstable even when the second fuel is supplied. Thus, when the engine body is cold, the controller assists combustion of the air-fuel mixture via the ignition assist device.

The assisted combustion is not significantly affected by the fuel characteristics. Therefore, both of the first and second fuels can be used as the fuel, but this compression ignition engine uses the first fuel as the fuel. Note that when the engine body is cold, only the first fuel may be supplied.

The reason why the first fuel is used solely is that the first fuel vaporizes relatively easily, and forms a homogeneous air-fuel mixture in the combustion chamber as described above, thereby reducing the generation of soot during combustion. Reduction of the generation of the soot permits supply of a large amount of the first fuel. Accordingly, a relatively large amount of the first fuel can be used to burn the air-fuel mixture in a fuel-rich state. This can generate high combustion heat. Using the high combustion heat, various components including the catalytic device can be quickly warmed up.

Therefore, the compression ignition engine can reduce the generation of, e.g., soot, which can provide a fuel-rich state, and can quickly warm up the compression ignition engine.

The first fuel may have a lower boiling point than the second fuel.

This configuration causes the first fuel to vaporize under the condition that the pressure and temperature of the combustion chamber are low, thereby allowing the fuel to be supplied from an intake stroke where the pressure of the combustion chamber is low. Since the timing for the fuel supply can be made earlier and the vaporization characteristic is enhanced, a homogeneous air-fuel mixture can be formed even if the supply amount of the first fuel is increased. This can reduce the generation of the soot and CO, and can improve the torque and fuel economy performance.

When only the first fuel is supplied, the controller may output a control signal to the first fuel supply such that the first fuel is supplied to, and combusted in, the combustion chamber, thereby making an air-fuel ratio of exhaust gas discharged from the combustion chamber equal to or less than 15.0.

As described above, in the compression ignition engine, the air-fuel ratio is made substantially equal to or less than substantially the stoichiometric air-fuel ratio when the engine is cold, so that combustion can be performed in a fuel-rich state. This can generate high combustion heat by taking advantage of the characteristics of the first fuel of reducing the generation of soot or the like. Thus, the compression ignition engine can be quickly warmed up.

The compression ignition engine may further include a sensor connected to the controller, and configured to detect a parameter related to a temperature of the engine body. When the temperature of the engine body is low, the controller may output a control signal to the ignition assist device to retard timing for assisting the ignition behind timing for assisting the ignition when the temperature of the engine body is high.

For example, when the engine body is not warmed up enough, the timing for assisting the ignition is retarded. Thus, the combustion gravity center of the air-fuel mixture is shifted toward the retarded side, thereby reducing thermal efficiency. Reduction of the thermal efficiency causes heat energy of the exhaust gas to increase. Thus, this is advantageous for quick warming up of the catalytic device.

The compression ignition engine may further include a catalytic device configured to purify exhaust gas discharged from the combustion chamber. The controller may determine whether the catalytic device is in a predetermined half-warmed state, and the controller may output a control signal to the first fuel supply and the ignition assist device to supply the first fuel only, and to assist the ignition of the air-fuel mixture formed by the first fuel, until the catalytic device is at least warmed up to the half-warmed state.

Here, the "half-warmed state" includes, for example, a state in which the catalytic device is warmed up to a predetermined temperature equal to or lower than an activation temperature.

For example, until the catalytic device reaches the half-warmed state, assistance of the ignition of the air-fuel mixture formed of the first fuel only and retardation of the timing for assisting the ignition are continuously performed. This is advantageous for activation of the catalyst through retarded combustion.

A three-way catalyst as a catalytic device for purifying exhaust gas discharged from the combustion chamber may be disposed in an exhaust passage of the engine body. After the engine body is warmed up, the controller outputs a control signal to the first fuel supply or the first and second fuel supplies so that the first fuel or the first and second fuels is/are supplied to, and combusted in, the combustion chamber, thereby causing an air-fuel ratio of exhaust gas upstream of the three-way catalyst in the exhaust passage to be a stoichiometric air-fuel ratio.

As described above, forming the air-fuel mixture containing the first fuel can reduce the generation of soot and CO during combustion. On the other hand, after the engine body is warmed up, the air-fuel ratio of the exhaust gas discharged from the combustion chamber is set to the stoichiometric air-fuel ratio. Note that the air-fuel ratio ranging from 14.5 to 15.0 corresponds to the purification window of the three-way catalyst. When the air-fuel ratio of the exhaust gas is set to the stoichiometric air-fuel ratio, the three-way catalyst disposed in the exhaust passage can more reliably purify CO, HC and NOx in the exhaust gas. Therefore, emission performance of the compression ignition engine is further enhanced through the formation of the air-fuel mixture containing the first fuel and setting the air-fuel ratio of the exhaust gas to the stoichiometric air-fuel ratio.

In a conventional diesel engine, it has been required to increase a supercharging capacity and make the air-fuel ratio upon the combustion lean, thereby reducing soot, CO, and NOₓ. However, in the present configuration, supplying the first fuel can make the air-fuel ratio of the air-fuel mixture be the stoichiometric air-fuel ratio. Further, use of the three-way catalyst in combination can reduce the soot and CO, and NOₓ, too, without relying on the supercharging unlike the conventional diesel engine. Thus, an inexpensive engine with no supercharger can be provided.

The first fuel may include naphtha, and the second fuel may include diesel fuel.

Naphtha vaporizes more easily than the diesel fuel. This is advantageous for the production of a homogeneous air-fuel mixture in the combustion chamber. Since the diesel fuel ignites more easily than naphtha, the air-fuel mixture is compressed and ignited at an appropriate timing. In addition, use of naphtha is cost-effective because naphtha is relatively inexpensive.

The first fuel may include gasoline, and the second fuel may include diesel fuel.

As mentioned above, the homogeneous air-fuel mixture can be produced in the combustion chamber, and the air-fuel mixture can be compressed and ignited at an appropriate timing.

### [ADVANTAGES OF THE INVENTION]

As can be seen in the foregoing, the compression ignition engine described above can reduce the generation of, e.g., soot. This can achieve a fuel-rich state, and can quickly warm the compression ignition engine.

### BRIEF DESCRIPTION OF THE DRAWINGS

[FIG. 1] FIG. 1 is a schematic view illustrating a configuration of an engine system.
[FIG. 2] FIG. 2 is a block diagram illustrating a configuration relating to control of the engine system.
[FIG. 3] FIG. 3 is a diagram illustrating fuel injection timing.
[FIG. 4] FIG. 4 is a diagram illustrating preferred operating regions of the engine system.
[FIG. 5] FIG. 5 is a diagram illustrating timing of fuel injection and ignition assist when an engine is cold.
[FIG. 6] FIG. 6 is a diagram for explaining intake delayed closing control.
[FIG. 7] FIG. 7 is a flowchart illustrating a specific example of control of the engine system.
[FIG. 8] FIG. 8 is a table showing main specifications of the engine system.
[FIG. 9] FIG. 9 is a graph illustrating relationship between an indicated mean effective pressure (IMEP) and an indicated specific fuel consumption (gross ISFC) according to an example.
[FIG. 10] FIG. 10 is a graph illustrating relationship between the indicated mean effective pressure (IMEP) and an amount of NOₓ emission according to the example.

### [DESCRIPTION OF EMBODIMENTS]

An embodiment of a compression ignition engine will be described in detail below with reference to the drawings. An example of the compression ignition engine will be described below.

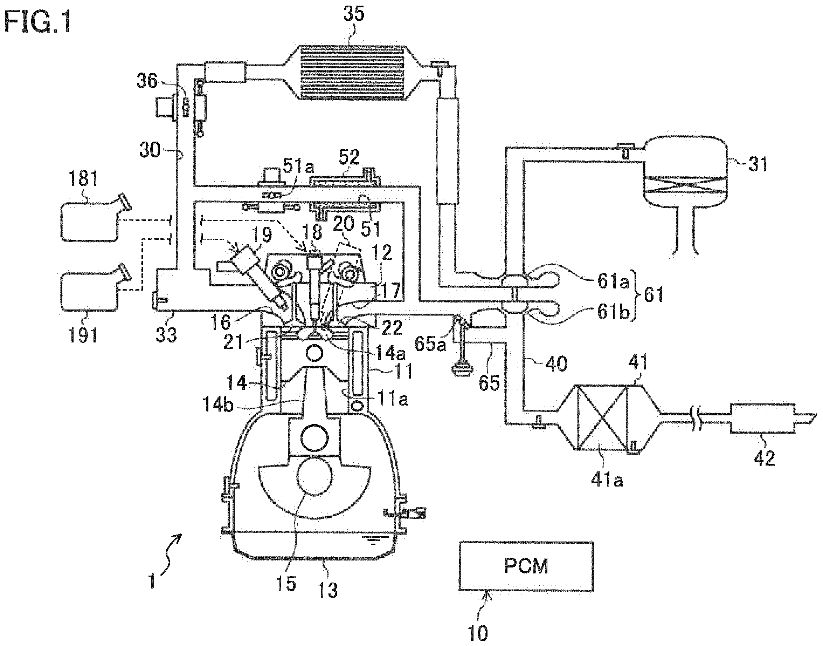

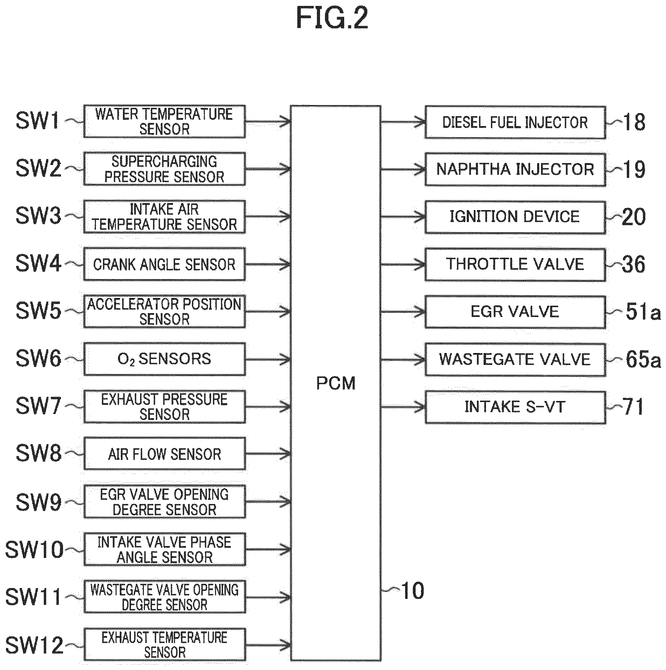

FIG. 1 illustrates a schematic configuration of an engine system. FIG. 2 illustrates a configuration related to control of the engine system. The engine system is mounted in a four-wheel vehicle. The engine system disclosed herein is suitable for, for example, large vehicles such as large trucks. However, the engine system disclosed herein can be widely applied to various four-wheel vehicles regardless of sizes of the vehicles.

The engine system includes a diesel engine 1 as a compression ignition engine. The operation of the diesel engine 1 allows a vehicle to travel.

The engine system is configured to supply, to the diesel engine 1, diesel fuel (that is, light oil or fuel mainly composed of light oil) and a different kind of fuel having properties different from those of the diesel fuel. The different kind of fuel has at least one of a pressure or temperature, at which compression ignition is initiated, higher than that of the diesel fuel, and a boiling point lower than that of the diesel fuel. The different kind of fuel vaporizes more easily, and ignites less easily, than the diesel fuel. The different kind of fuel corresponds to "first fuel," and the diesel fuel corresponds to "second fuel." The different kind of fuel is fuel mainly for generating torque. The diesel fuel is fuel mainly for ignition.

The different kind of fuel is specifically naphtha. Examples of naphtha which can be used in the engine system include light naphtha, heavy naphtha, and full-range naphtha. Light naphtha, heavy naphtha, and full-range naphtha have different boiling point ranges. Alternatively, a blend of naphtha and a small amount of crude oil or heavy oil may be used as modified naphtha in the engine system.

The above-mentioned different kind of fuel may be gasoline besides naphtha. Further, the different kind of fuel is not limited to one kind of fuel, and may be a blend of two or more kinds of fuel. For example, a blend of naphtha and gasoline, a blend of naphtha and other fuel, or a blend of gasoline and other fuel may be used as the different kind of fuel.

Hereinafter, the engine system will be described on the premise that the diesel fuel and naphtha are supplied to the diesel engine 1.

### <Configuration of Engine System>

The diesel engine 1 includes a cylinder block 11 provided with a plurality of cylinders 11a (only one is shown in FIG. 1), a cylinder head 12 disposed on the cylinder block 11, and an oil pan 13 disposed under the cylinder block 11 and storing lubricating oil. A piston 14 is fitted into each of the cylinders 11a of the diesel engine 1 so as to reciprocate along a central axis of each cylinder 11a. The piston 14 is coupled to a crankshaft 15 via a connecting rod 14b. The top surface of the piston 14 has a cavity defining a re-entrant combustion chamber 14a. The diesel engine 1 has a geometric compression ratio of 13 or more and 18 or less.

The cylinder head 12 is provided with an intake port 16 and an exhaust port 17 for each of the cylinders 11a. Each intake port 16 is provided with an intake valve 21 for opening and closing an opening of the combustion chamber 14a. Each exhaust port 17 is provided with an exhaust valve 22 for opening and closing the opening of the combustion chamber 14a.

The diesel engine 1 is provided with an intake sequential valve timing (S-VT) 71 for making valve timing variable, as a valve operating mechanism for driving the intake valve 21 (see FIG. 2). The intake S-VT 71 may have various configuration such as a hydraulic configuration or an electromotive configuration. The diesel engine 1 changes the valve timing of the intake valve 21 in accordance with an operating state.

The cylinder head 12 is provided with a naphtha injector 19 as a "first fuel supply," and a diesel fuel injector 18 as a "second fuel supply."

The naphtha injector 19 is configured to inject naphtha into the intake port 16. Specifically, the naphtha injector 19 is disposed in such a way that an injection hole thereof injecting the naphtha faces the inside of the intake port 16 of each of the cylinders 11a. Naphtha stored in a first fuel tank 191 is supplied to the naphtha injector 19 through a naphtha supply path (not shown).

The diesel fuel injector 18 is configured to directly inject the diesel fuel into the combustion chamber 14a. Specifically, the diesel fuel injector 18 is disposed in such a way that an injection hole thereof injecting the diesel fuel faces the inside of each of the cylinders 11a through a bottom surface of the cylinder head 12. Although the diesel fuel injector 18 is disposed on a central axis of each of the cylinders 11a in the illustrated example, the diesel fuel injector 18 may be disposed at an appropriate position. The diesel fuel stored in a second fuel tank 181 is supplied to the diesel fuel injector 18 through a diesel fuel supply path (not shown).

An ignition assist device is also attached to the cylinder head 12. The ignition assist device assists ignition of the air-fuel mixture when the diesel engine 1 is in a specific operating state. Specifically, the ignition assist device is an ignition device 20 for igniting the air-fuel mixture by spark ignition. Although detailed illustration is omitted, the ignition device 20 is disposed in such a way that an electrode thereof faces the inside of the combustion chamber 14a. The ignition assist device may be a glow plug which enhances ignitability of the fuel by heating the air inside each of the cylinders 11a, instead of the ignition device.

An intake passage 30 is connected to one side surface of the diesel engine 1. The intake passage 30 communicates with the intake port 16 of each of the cylinders 11a. The intake passage 30 introduces the air and an EGR gas into each of the cylinders 11a. An exhaust passage 40 is connected to another side surface of the diesel engine 1. The exhaust passage 40 communicates with the exhaust port 17 of each of the cylinders 11a. The exhaust passage 40 discharges burnt gas from each of the cylinders 11a. As will be described in detail later, the intake passage 30 and the exhaust passage 40 are provided with a turbosupercharger 61 for supercharging the air.

An air cleaner 31 which filters the air is provided at an upstream end of the intake passage 30. A surge tank 33 is provided in the vicinity of a downstream end of the intake passage 30. A portion of the intake passage 30 located downstream of the surge tank 33 constitutes independent passages which respectively branch off for the cylinders 11a. A downstream end of each of the independent passages is connected to the intake port 16 of each of the cylinders 11a.

Between the air cleaner 31 and the surge tank 33 in the intake passage 30, a compressor 61a of the turbosupercharger 61, an intercooler 35 for cooling the air compressed by the compressor 61a, and a throttle valve 36 for adjusting an amount of the air are disposed. The intercooler 35 may be an air-cooling or water-cooling type intercooler. Although the throttle valve 36 is basically fully open, for example, when a large amount of the EGR gas is recirculated back to the intake passage 30, the throttle valve 36 is throttled to generate a negative pressure in the intake passage 30.

An upstream portion of the exhaust passage 40 is an exhaust manifold. The exhaust manifold has a plurality of independent passages branched to the cylinders 11a and connected to an outer end of the exhaust port 17, and a collecting part where the plurality of independent passages are assembled.

In a portion of the exhaust passage 40 downstream of the exhaust manifold, a turbine 61b of the turbosupercharger 61, an exhaust gas purifier 41 which purifies harmful components in an exhaust gas, and a silencer 42 are disposed sequentially from the upstream side.

The exhaust gas purifier 41 has a three-way catalyst 41a as a catalytic device. The three-way catalyst 41a purifies hydrocarbon (HC), carbon monoxide (CO), and nitrogen oxide (NOₓ) in the exhaust gas at the same time. The three-way catalyst 41a oxidizes hydrocarbon to water and carbon dioxide, oxidizes carbon monoxide to carbon dioxide, and reduces nitrogen oxide to nitrogen. When an air-fuel ratio (weight ratio of air and fuel) of the exhaust gas is a stoichiometric air-fuel ratio, the three-way catalyst 41a can sufficiently purify the exhaust gas. Even in a purification window in which the air-fuel ratio is 14.5 to 15.0, which is substantially the stoichiometric air-fuel ratio, the three-way catalyst 41a can purify the exhaust gas.

In addition to the three-way catalyst 41a, the exhaust gas purifier 41 may have a particulate filter for collecting particulates such as soot contained in the exhaust gas.

An exhaust gas recirculation passage 51 is interposed between the intake passage 30 and the exhaust passage 40. Through the exhaust gas recirculation passage 51, part of the exhaust gas is recirculated to the intake passage 30. An upstream end of the exhaust gas recirculation passage 51 is connected to the exhaust passage 40 at a position between the exhaust manifold and the turbine 61b (that is, a portion upstream of the turbine 61b). A downstream end of the exhaust gas recirculation passage 51 is connected to the intake passage 30 at a position between the surge tank 33 and the throttle valve 36 (that is, a portion downstream of the compressor 61a). An EGR valve 51a for adjusting the amount of the exhaust gas recirculated to the intake passage 30, and an EGR cooler 52 for cooling the exhaust gas with an engine coolant are disposed in the exhaust gas recirculation passage 51.

The turbosupercharger 61 has the compressor 61a disposed in the intake passage 30, and the turbine 61b disposed in the exhaust passage 40. The compressor 61a and the turbine 61b are connected to each other, and the compressor 61a and the turbine 61b rotate integrally with each other. The compressor 61a is disposed in the intake passage 30 at a position between the air cleaner 31 and the intercooler 35. The turbine 61b is disposed in the exhaust passage 40 at a position between the exhaust manifold and the exhaust gas purifier 41. The turbine 61b is rotated by an exhaust gas flow, thereby rotating the compressor 61a to compress the air.

An exhaust bypass passage 65 for bypassing the turbine 61b is connected to the exhaust passage 40. The exhaust bypass passage 65 is provided with a wastegate valve 65a for adjusting an amount of the exhaust gas which flows through the exhaust bypass passage 65. The wastegate valve 65a is configured to be in a fully open state (normally open) when not energized.

### <Configuration of Control Device of Engine>

As shown in FIGS. 1 and 2, the diesel engine 1 is controlled by a powertrain control module (hereinafter, referred to as a "PCM") 10. The PCM 10 is comprised of a microprocessor having a CPU, a memory, a counter/timer group, an interface, and a path connecting these units together. The PCM 10 constitutes a control device (and a controller). As shown in FIG. 2, the PCM 10 receives detection signals from various sensors. The sensors included here are: a water temperature sensor SW1 for detecting the temperature of the engine coolant; a supercharging pressure sensor SW2 attached to the surge tank 33 to detect the pressure of the air supplied to the combustion chamber 14a; an intake air temperature sensor SW3 for detecting the temperature of the air; a crank angle sensor SW4 for detecting the rotation angle of the crankshaft 15; an accelerator position sensor SW5 for detecting an accelerator position corresponding to the degree to which an accelerator pedal (not shown) of the vehicle is depressed; O₂ sensors SW6 which are respectively attached to portions of the exhaust passage 40 upstream and downstream of the three-way catalyst 41a to detect the concentration of oxygen in the exhaust gas; an exhaust pressure sensor SW7 for detecting an exhaust pressure in a portion of the exhaust passage 40 upstream of the turbine 61b; an air flow sensor SW8 for detecting the flow rate of intake air taken into the intake passage 30; an EGR valve opening degree sensor SW9 for detecting the opening degree of the EGR valve 51a; an intake valve phase angle sensor SW10 for detecting the phase angle of the intake valve 21; a wastegate valve opening degree sensor SW11 for detecting the opening degree of the wastegate valve 65a; and an exhaust temperature sensor SW12 for detecting the temperature of the exhaust gas flowed from the three-way catalyst 41a.

The PCM 10 performs various calculations based on the detection signals of these sensors SW1 to SW12, thereby determining states of the diesel engine 1 and the vehicle, and outputs control signals to actuators of the diesel fuel injector 18, the naphtha injector 19, the ignition device 20, the intake S-VT 71, the throttle valve 36, the EGR valve 51a, and the wastegate valve 65a to control these components.

For example, based on the temperature of the engine coolant detected by the coolant temperature sensor SW1, the PCM 10 determines whether the diesel engine 1 is cold and not warmed up yet or has been warmed up, and outputs a control signal to, e.g., the ignition device 20 based on the determination result. Although details will be described later, the operating region in the cold state corresponds to a cold region (CS region), and the operating region in the warmed-up state corresponds to a low load region (P region), a medium load region (S1 region), and a high load region (S2 region).

### <Basic Control of Engine>

The basic control of the diesel engine 1 by the PCM 10 is mainly to determine a target torque based on an accelerator position, and to allow the diesel fuel injector 18 and the naphtha injector 19 to inject the fuel corresponding to the target torque.

The PCM 10 also adjusts the amount of the air to be introduced into the cylinders 11 a in accordance with the operating state of the diesel engine 1. Specifically, the PCM 10 adjusts the amount of the air by controlling opening degrees of the throttle valve 36 and the EGR valve 51a (that is, control of EGR) and/or by controlling valve timing of the intake valve 21 by the intake S-VT 71 (that is, intake delayed closing control). When the delayed closing control is performed, i.e., the intake valve 21 is closed (a point in time when a lift height of the intake valve 21 is 0.4 mm is defined as a valve closing point) within a range of 60° to 120° after an intake bottom dead center in a middle stage of a compression stroke (suppose that a crank angle of 180° in the combustion stroke is divided into three equal stages, namely, an initial stage, a middle stage, and a last stage), an amount of the air introduced into the cylinders 11a can be adjusted without increasing pump loss. In addition, recirculation of the EGR gas can adjust the amount of the air to be introduced into the cylinders 11a, and can increase the temperature inside the cylinders 11a (while compensating an insufficient rise in the temperature inside the cylinders 11a near the compression top dead center accompanying the decrease in an effective compression ratio caused by the intake delayed closing control), thereby enhancing the ignitability of the air-fuel mixture. Further, when the EGR gas is recirculated in a high load region in which the temperature inside the cylinder 11a becomes high, a low temperature inert gas that has flowed through the EGR cooler 52 is recirculated to the combustion chamber 14a, which can block premature ignition of the air-fuel mixture (naphtha), and can ignite the air-fuel mixture at proper ignition timing at which high engine torque can be generated.

The PCM 10 further performs air-fuel ratio feedback control, i.e., adjusts an air amount and a fuel amount based on the concentration of oxygen in the exhaust gas detected by the O₂ sensors SW6, and the intake air flow rate detected by the air flow sensor SW8. The PCM 10 sets the air-fuel ratio of the air-fuel mixture in the combustion chamber 14a (that is, a weight ratio (A/F) between the air (A) and the fuel (F) in the combustion chamber 14a) to be the stoichiometric air-fuel ratio, and sets the air-fuel ratio of the exhaust gas discharged from the combustion chamber 14a to be the stoichiometric air-fuel ratio.

Since the weight ratio A/F = 14.5 to 15.0 is an air-fuel ratio corresponding to the purification window of the three-way catalyst 41a, the air-fuel ratio in the combustion chamber 14a may be set to a substantially stoichiometric air-fuel ratio (14.5 to 15.0), and the air-fuel ratio of the exhaust gas discharged from the combustion chamber 14a may be set to a range of 14.5 to 15.0. The fuel amount referred to herein is a total fuel amount including both of the diesel fuel and naphtha. The engine system performs air-fuel ratio feedback control over the entire operating region of the diesel engine 1. Thus, the engine system purifies the exhaust gas using the three-way catalyst 41a over the entire operating region of the diesel engine 1.

### <Fuel Injection Control>

Next, the fuel injection control executed by the PCM 10 will be described. As described above, the engine system mainly supplies naphtha for generating torque and the diesel fuel for ignition to the diesel engine 1. When the weight of supplied naphtha is compared to the weight of supplied diesel fuel, the weight of supplied naphtha is larger than the weight of supplied diesel fuel. The amount of supplied diesel fuel accounts for 10% or less of the total amount of fuel supplied to the combustion chamber 14a in terms of ratio by weight. The amount of supplied diesel fuel may account for, for example, 5% of the total amount of fuel supplied.

Since naphtha has a lower boiling point than the diesel fuel, naphtha easily vaporizes in the combustion chamber 14a. Therefore, an air-fuel mixture which is homogeneous and has an air-fuel ratio approximating the stoichiometric air-fuel ratio is formed inside the combustion chamber 14a by using naphtha. Thus, generation of soot is reduced, and generation of CO is reduced.

On the other hand, at least one of a pressure or temperature of naphtha at which the compression ignition is initiated is lower than that of the diesel fuel. That is, naphtha is low in ignitability. As described above, the diesel engine 1 is configured to have a low geometric compression ratio of 13 or more and 18 or less, which is disadvantageous for the ignition of the fuel.

Therefore, in this engine system, the diesel fuel having excellent ignitability is supplied into the combustion chamber 14a. Since the diesel fuel functions as the fuel for the ignition, the air-fuel mixture can be reliably compressed and ignited at predetermined timing. The air-fuel mixture including naphtha and the diesel fuel is combusted.

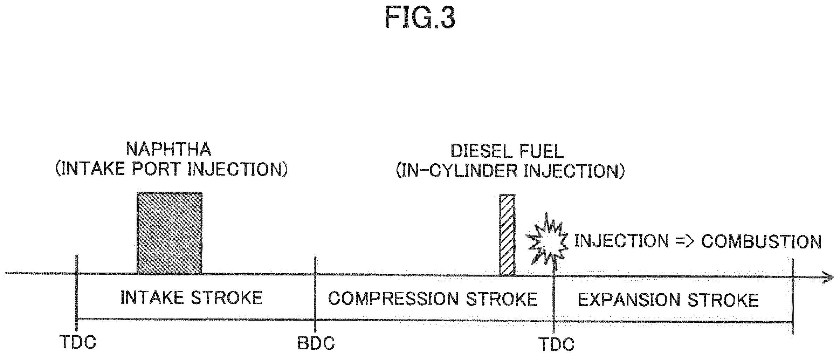

FIG. 3 illustrates timing at which naphtha is injected, and timing at which the diesel fuel is injected, at a predetermined engine speed. The naphtha injector 19 attached to the intake port 16 injects naphtha into the intake port 16 during an intake stroke period in which the intake valve 21 is open. The timing at which naphtha is injected may be set within a period from the middle stage to initial stage of the intake stroke. Here, the initial and middle stages of the intake stroke may be those of the intake stroke when the intake stroke is divided into three equal stages, namely, the initial stage, the middle stage, and a last stage. During the period from the middle stage to initial stage of the intake stroke, the intake air flow in each of the cylinders 11a increases. Injecting naphtha during this period allows naphtha to be diffused throughout the combustion chamber 14a, and the air-fuel mixture to be homogenized, by means of the intake air flow.

The diesel fuel injector 18 mounted in such a way as to face the inside of the combustion chamber 14a injects the diesel fuel into the combustion chamber 14a during the compression stroke period. The timing at which the diesel fuel is injected may be set in the vicinity of the compression top dead center, specifically, within a period of 30 to 10 crank angle (CA) degrees before the compression top dead center. In this way, the air-fuel mixture is compressed and ignited in the vicinity of the compression top dead center, and the combustion can be started. When a combustion gravity center of this combustion is set to be within a range of 5 to 10 CA degrees after the compression top dead center, a thermal efficiency of the diesel engine 1 is enhanced. In addition, as described above, since the geometric compression ratio of the diesel engine 1 is low, the air-fuel mixture containing naphtha can be substantially prevented from being ignited prematurely before the diesel fuel is injected. Adjusting the timing at which the diesel fuel is injected can adjust the timing at which the air-fuel mixture is compressed and ignited.

### <Operating Range of Engine>

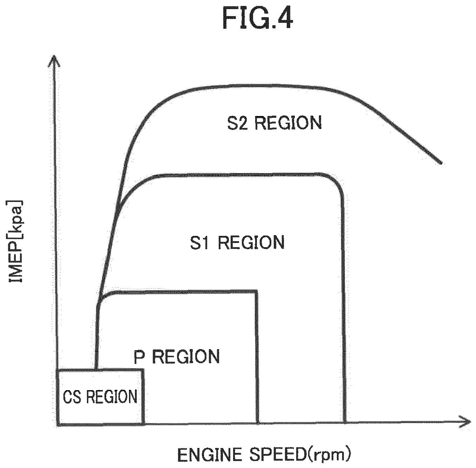

FIG. 4 shows an example of suitable operating region of the diesel engine 1. The vertical axis represents an engine load (IMEP), and the horizontal axis an engine speed. The operating region of the diesel engine 1 is roughly divided into four regions, namely, a cold region (CS region), a low load region (P region), a medium load region (S1 region), and a high load region (S2 region), with respect to the magnitude of the load and the engine speed at which the output is required. The PCM 10 is provided with a map obtained by converting the operating region into data, and the PCM 10 executes control according to the map.

### (Cold Region: CS Region)

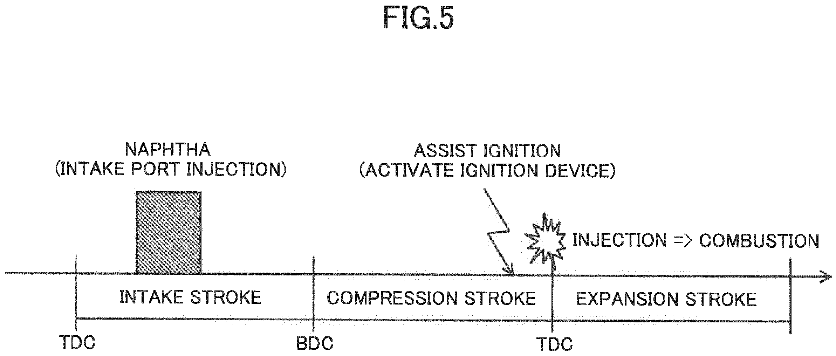

FIG. 5 illustrates the timing at which the naphtha fuel is injected, and the timing at which ignition is assisted, when the engine is in a cold state. The cold region is a region in which the load and the engine speed output by the diesel engine 1 are the lowest. For example, the cold region is an operating region where the diesel engine 1 is cold, i.e., not warmed up yet when started, for example, when the diesel engine 1 is forcedly started (when a passenger operates the key or button to start the diesel engine 1), or when the diesel engine 1 is used in a cold district or a cold season. Specifically, the cold region corresponds to an operating region where the temperature of the engine coolant detected by the water temperature sensor SW1 is equal to or lower than a preset reference temperature (e.g., 80°C). Of course, the three-way catalyst 41a has not reached the temperature at which the three-way catalyst 41a properly works (temperature corresponding to the activation temperature of the three-way catalyst 41a).

Usually, when the diesel engine 1 is operated for about several tens of seconds, the engine speed is stabilized, and the temperature of the engine coolant also reaches the reference temperature. Once the engine speed is stabilized, the PCM 10 quickly warms up the three-way catalyst 41a, and performs control such that the air-fuel ratio approaches the substantially stoichiometric air-fuel ratio. However, in the cold region, the compression ignition may possibly become unstable.

Accordingly, in the cold region, the PCM 10 supplies only naphtha to the combustion chamber 14a, and assists ignition of the air-fuel mixture formed by the naphtha. Specifically, the PCM 10 uses inexpensive naphtha only as the fuel to make the air-fuel mixture rich in fuel, and forcibly ignites the air-fuel mixture using the ignition device 20 to perform combustion.

That is, in the diesel engine 1, the geometric compression ratio is set low in order to block naphtha from self-igniting in the region where the load is high. Therefore, the compression ignition does not occur easily in an operating region with a relatively low load, such as the cold region or the low load region. In addition, since the temperature of the combustion chamber 14a is low when the engine is cold, neither the diesel fuel nor naphtha can cause stable compression ignition. Therefore, in the cold region, the PCM 10 forcibly burns the air-fuel mixture by igniting the air-fuel mixture using the ignition device 20.

The forced combustion by ignition is not significantly affected by the fuel characteristics. Therefore, any of naphtha and the diesel fuel can be used as the fuel, but only naphtha is used for the fuel in the diesel engine 1 (100% naphtha).

One of the reasons why naphtha is used solely is that naphtha is more likely to vaporize than the diesel fuel. Further, the diesel fuel, which is directly injected into the combustion chamber 14a, cannot easily generate the air-fuel mixture in the combustion chamber 14a. However, naphtha, which is injected at the intake port 16, can generate a homogeneous air-fuel mixture in the combustion chamber 14a. Therefore, being capable of performing more homogeneous combustion than the diesel fuel, naphtha can advantageously reduce the generation of soot during combustion. Reduction of the generation of the soot permits supply of a large amount of naphtha. Accordingly, a relatively large amount of naphtha can be used to burn the air-fuel mixture in a fuel-rich state. This can generate high combustion heat. Using the high combustion heat, the temperature of components of the diesel engine 1, such as the three-way catalyst 41a, can be quickly raised to an appropriate temperature.

Specifically, when only naphtha is supplied in the cold region, the PCM 10 makes the air-fuel ratio of the exhaust gas discharged from the combustion chamber 14a substantially equal to or less than substantially the stoichiometric air-fuel ratio (more specifically, 15.0 or less). This can achieve a fuel-rich state, and can generate high combustion heat by taking advantage of the characteristics of the first fuel of reducing the generation of, e.g., soot. Thus, the diesel engine 1 can be quickly warmed up.

In addition, naphtha is less expensive than the diesel fuel. Therefore, if the amount of naphtha used is larger than that of the diesel fuel, the operating cost can be reduced, which is economically advantageous. Note that this does not exclude the use of the diesel fuel. In the case of forced ignition, the diesel fuel is also usable, and may be contained as part of the fuel.

In this manner, when this diesel engine 1 is cold, a relatively large amount of naphtha is supplied to the combustion chamber 14a to make the air-fuel mixture rich in fuel (the air-fuel ratio is 15 or less), thereby generating high combustion heat while promoting the reduction of emission such as soot or the like. As a result, the three-way catalyst 41a is quickly warmed up to an appropriate temperature. When the engine is cold, the EGR gas is low in temperature, and cannot provide a significant thermal effect even when recirculated. However, from the viewpoint of adjusting the air-fuel ratio, the EGR gas may be recirculated as necessary even when the engine is cold. In addition, the timing of the intake valve 21 when the engine is cold is set to be the reference timing in which the intake valve 21 is widely open during the intake stroke so that the combustion can be efficiently carried out.

Further, timing at which the ignition device 20 ignites the air-fuel mixture (i.e., timing at which the ignition device 20 assists the ignition) is appropriately adjusted in accordance with the temperature of the diesel engine 1. Specifically, the PCM 10 determines the temperature of the diesel engine 1 based on parameters related to the temperature of the diesel engine 1, such as the temperature of the engine coolant, and retards the ignition timing of the ignition device 20 when the engine temperature is determined to be low.

That is, if not warmed up enough, the diesel engine 1 retards the ignition timing of the ignition device 20. Specifically, the diesel engine 1 retards the ignition timing behind the minimum advance for the best torque (MBT), for example. Thus, the combustion gravity center of the air-fuel mixture is shifted toward the retarded side, thereby reducing thermal efficiency. Reduction of the thermal efficiency causes heat energy of the exhaust to increase. Thus, this is advantageous for quick warming up of the three-way catalyst 41a.

The PCM 10 is configured to supply only naphtha and assist ignition of the air-fuel mixture formed by naphtha until at least the three-way catalyst 41a is warmed up to reach a predetermined half-warmed state (warmed up to a predetermined temperature near the activation temperature of the three-way catalyst 41a).

That is, for example, until the three-way catalyst 41a reaches a half-warmed state, forced ignition of naphtha and retarding of ignition timing are continuously carried out. This is advantageous for catalyst activation through retarded combustion.

Then, when the three-way catalyst 41a reaches the proper operating temperature, the PCM 10 adjusts the air-fuel ratio to be the substantially stoichiometric air-fuel ratio. Consequently, the exhaust gas is purified, and emissions are effectively reduced. The torque also increases, and the engine performance improves.

That is, having completed the warming up of the diesel engine 1, the PCM 10 supplies naphtha, or naphtha and the diesel fuel, so that the exhaust gas discharged from the combustion chamber 14a has the stoichiometric air-fuel ratio in accordance with the operating state of the diesel engine 1.

As described above, forming the air-fuel mixture containing naphtha makes it possible to reduce the generation of soot and CO during combustion. On the other hand, when the air-fuel ratio of the exhaust gas is set to the stoichiometric air-fuel ratio, the three-way catalyst 41a disposed in the exhaust passage 40 can more reliably purify CO, HC and NOx of the exhaust gas, as described above. Therefore, forming the air-fuel mixture containing naphtha and setting the air-fuel ratio of the exhaust gas within the above-described range further enhance the emission performance of the diesel engine 1.

### (Low Load Region: P Region)

The low load region is a region where the load or the engine speed is higher than that of the cold region. In the low load region, the temperature of the engine coolant reaches the reference temperature, and the three-way catalyst 41a is also at a temperature at which the catalyst can properly work (i.e., the engine is warm). However, the load and the speed of the engine outputted in the low load region are still low in all the operating regions where the diesel engine 1 can be operated.

For example, when a region of the maximum load that can be outputted by the diesel engine 1 is divided into two equal regions, the low load region is one of the two equal regions with a lower load. Alternatively, when a region of the maximum speed that can be outputted by the diesel engine 1 is divided into two equal regions, the low load region is one of the two equal regions with a smaller speed. The low load region may be one, with the lowest load, of three equally divided regions of the region of the maximum load that can be outputted by the diesel engine 1, or one, with the smallest speed, of three equally divided regions of the region of the maximum speed that can be outputted by the diesel engine 1.

In the low load region, where the three-way catalyst 41a can properly work, the PCM 10 controls the air-fuel ratio of the air-fuel mixture in the combustion chamber 14a to be the substantially stoichiometric air-fuel ratio (A/F = 14.5 to 15.0) in order to reduce the emission. This causes the exhaust gas introduced into the three-way catalyst 41a to have the substantially stoichiometric air-fuel ratio, so that the exhaust gas can be effectively purified.

In the low load region, where the engine output is small, the amount of fuel supplied to the combustion chamber 14a is controlled to be small. Therefore, in the low load region, the combustion chamber 14a cannot be easily high in temperature, making stable compression ignition difficult. Therefore, also in the low load region, just like in the cold region, the PCM 10 adjust the ratio (weight ratio) of the fuel used such that the ratio of naphtha becomes higher than that of the diesel fuel (in this embodiment, 100% naphtha, just like in the cold region), and uses the ignition device 20 to ignite the air-fuel mixture, thereby causing forced combustion.

When the supply amount of fuel is small, the amount of air required to maintain the air-fuel ratio at the substantially stoichiometric air-fuel ratio also decreases. Therefore, the PCM 10 performs control so that a large amount of EGR gas is introduced into the combustion chamber 14a. Specifically, the PCM 10 adjusts an EGR rate (percentage of the mass of the EGR gas to the mass of all gas of the air-fuel mixture present in the combustion chamber 14a) to a value higher than that in the high load region (for example, 40%).

Reducing the opening degree of the throttle valve 36 can also reduce the amount of air, but disadvantageously deteriorates the flowability of the intake air, or causes pump loss. The adjustment by the EGR rate does not have such disadvantages, and a homogeneous mixture of the air and naphtha can be produced in the combustion chamber 14a. Moreover, since the temperature of the combustion chamber 14a can be increased by the amount of heat generated by the EGR gas, the air-fuel mixture in the combustion chamber 14a is easily ignited. Therefore, combustion can be stably carried out.

Naphtha is supplied to the intake port 16, and is mixed with the intake air to be introduced into the combustion chamber 14a. The EGR gas is recirculated to a portion of the intake passage 30 located upstream of the intake port 16 (a recirculation portion). Therefore, the intake air to which the high-temperature EGR gas is recirculated is introduced into the combustion chamber 14a with naphtha, which easily vaporizes, mixed therein. Thus, a more homogeneous mixture of the air and naphtha can be produced in the combustion chamber 14a.

Thus, adjusting the introduction amount of the EGR gas and setting the EGR rate to be high make it possible to adjust the air-fuel ratio to be the substantially stoichiometric air-fuel ratio, that is, within a range of 14.5 to 15.0. As a result, the emission can be effectively reduced by using the three-way catalyst 41a. As the load increases, the supply of fuel also increases accordingly. In order to maintain the air-fuel ratio at the substantially stoichiometric air-fuel ratio, the amount of air needs to be increased. Thus, since the amount of air increases with the increase in load, the PCM 10 preferably performs control the amount of the EGR gas to be large, or relatively small (decreases the EGR rate).

In the low load region, in order to reduce the amount of air and the pump loss, the PCM 10 performs control for retarding the valve timing of the intake valve 21 (intake delay closing control).

In the low load region, forcible combustion using the ignition device 20 is performed, and no compression ignition is performed. Thus, stable combustion can be carried out even when the pressure in the combustion chamber 14a is relatively low. On the other hand, since the output of the diesel engine 1 is small in the low load region, the pump loss becomes relatively large, thereby greatly affecting the fuel economy. Therefore, the PCM 10 controls the intake S-VT 71 to delay the closing point of the intake valve 21, thereby opening the intake valve 21 for a longer time during the compression stroke.

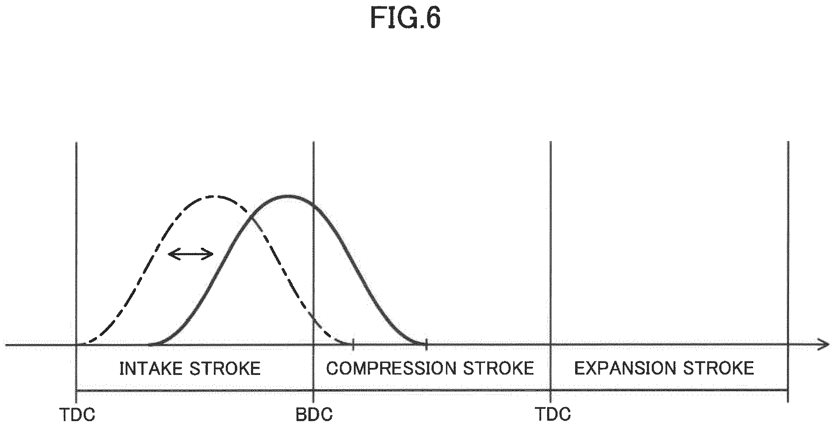

More specifically, as indicated by a solid curve in FIG. 6, the intake S-VT 71 is controlled to increase a period (closing period) from the intake bottom dead center to the point in time when the valve is closed, thereby delaying the valve timing of the intake valve 21. The closing period is a portion of an open period of the intake valve 21 (a period during which the intake valve 21 is open, or a period during which the intake air can be introduced to the combustion chamber 14a), the portion being in the compression stroke. In FIG. 6, a virtual curve indicates reference valve timing for the intake valve 21. In this embodiment, timing at which the intake valve 21 is closed is at 30 CA degrees after the intake bottom dead center. On the other hand, the closing point of the valve that has been changed by the delayed closing control is at 90 CA degrees after the intake bottom dead center. The closing point of the intake valve 21 is defined as a point at which a lift amount of the intake valve 21 is reduced to 0.4 mm.

The intake delayed closing control performed in this manner reduces the effective compression ratio, and decreases the pump loss. Therefore, the fuel economy can be improved. Further, the amount of intake air to be introduced into the combustion chamber 14a can be adjusted to be small, which is advantageous in the low load region where the amount of air is relatively excessive.

### (Medium Load Region: S1 Region)

The medium load region is a region where the load or the engine speed output from the diesel engine 1 is higher than that of the low load region. The medium load region is an intermediate operating region in the entire operating region of the diesel engine 1, and is relatively suitable for combustion.

For example, when a region of the maximum load that can be outputted by the diesel engine 1 is divided into two equal regions, the medium load region is one of the two equal regions with a higher load. Alternatively, when a region of the maximum speed that can be outputted by the diesel engine 1 is divided into two equal regions, the medium load region is one of the two equal regions with a larger speed. The medium load region may be an intermediate one of three equally divided regions of the region of the maximum load that can be outputted by the diesel engine 1, or an intermediate one of three equally divided regions of the region of the maximum speed that can be outputted by the diesel engine 1.

The engine output is higher in the medium load region than in the low load region. Thus, the amount of fuel supplied to the combustion chamber 14a increases, and combustion energy also increases. Therefore, the inside of the combustion chamber 14a is combustible through compression ignition based on the design of the engine system.

That is, in this engine system, naphtha is used as the main fuel, and the ignition is promoted by supplementarily using the diesel fuel according to the operating state of the engine, so that the compression ignition can be stably performed. For example, in the medium load region of the diesel engine 1 of this embodiment, 95% of naphtha and 5% of diesel fuel, by weight ratio, are supplied to the combustion chamber 14a, and combustion is carried out through compression ignition.

In the medium load region where the engine output is larger than that of the low load region, fuel consumption is less influenced by the pump loss. Thus, the valve timing of the intake valve 21 is controlled to advance toward the intake bottom dead center, and is returned to the reference setting. The intake delayed closing control is not performed. Thereby, the amount of intake air introduced into the combustion chamber 14a becomes larger than that in the low load region, and the combustion can be efficiently performed. The effective compression ratio also increases to approach the geometric compression ratio, thereby facilitating the compression ignition.

The air-fuel ratio of the air-fuel mixture in the combustion chamber 14a in the medium load region is maintained at substantially the stoichiometric air-fuel ratio through the adjustment of the EGR rate, just like in the low load region. As a result, efficient combustion can be carried out, which can increase the engine output, and can improve the fuel economy. The three-way catalyst 41a can effectively purify the exhaust gas. The intake air in the medium load region may be natural intake air, or supercharged by the turbo supercharger 61.

The amount of fuel supplied increases with the increase in load, and the amount of air needs to be increased to maintain the air-fuel ratio at substantially the stoichiometric air-fuel ratio. Therefore, even in the medium load region, just like in the low load region, the amount of EGR gas may be relatively reduced in accordance with the increase in load.

### (High Load Region: S2 Region)

The high load region is a region in which the engine output is higher than that in the medium load region. The high load region is located on the highest load side in the entire operating region of the diesel engine 1. That is, the high load region is a region located on the high load side or the high speed side of the medium load region.

In the high load region, continuous from the medium load region, naphtha for generating torque and the diesel fuel for ignition are combined to perform compression ignition. The ignition device 20 does not cause ignition. In order to obtain high output, a large amount of fuel is supplied to the combustion chamber 14a in the high load region. In order to maintain the air-fuel ratio at the substantially stoichiometric air-fuel ratio, the amount of air is also increased in accordance with the amount of fuel supplied. Accordingly, the EGR rate becomes lower than that in the medium load region (for example, 30%). Supercharging is also carried out as needed. The valve timing of the intake valve 21 is set to the reference timing, and no intake delayed closing control is performed.

Even in the high-load region, the air-fuel ratio of the air-fuel mixture in the combustion chamber 14a is maintained at the substantially stoichiometric air-fuel ratio. This can make the torque high, improve the fuel economy, and effectively purify the exhaust gas.

### <Specific Control of Engine>

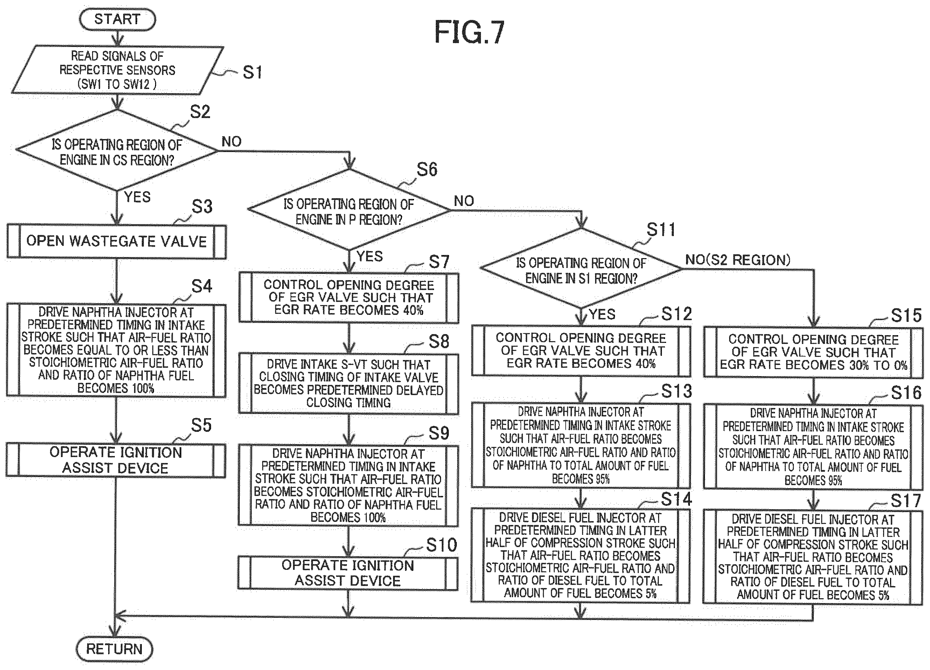

FIG. 7 shows an example of specific control of the diesel engine 1. The PCM 10 determines the operating state of the diesel engine 1 based on the detection signals from the sensors SW1 to SW12 (step S1). Based on the determination result and the map related to the operating state, the PCM 10 determines whether the diesel engine 1 is operated in any of the cold region (CS region), the low load region (P region), the medium load region (S1 region), and the high load region (S2 region), and executes combustion control suitable for the operation region based on the determination result.

When the engine is operated in the cold region (Yes is selected in step S2), the PCM 10 controls the waste gate valve 65a to open (step S3). Thus, the high-temperature exhaust gas discharged from the combustion chamber 14a bypasses the turbine 61b, and is sent to the three-way catalyst 41a as it is. As a result, combustion heat generated in the combustion chamber 14a can be efficiently applied to the three-way catalyst 41a. The combustion heat quickly warms the three-way catalyst 41a.

Then, the PCM 10 adjusts the combustion conditions to be suitable for the cold region (step S4). Specifically, control is performed such that the air-fuel ratio is equal to or less than the stoichiometric air-fuel ratio (A/F is 15 or less), that is, rich in fuel, and naphtha occupies the total amount of fuel.

The valve timing of the intake valve 21 is set to be the reference timing for which the intake valve 21 is widely open in the intake stroke, and the PCM 10 drives the naphtha injector 19 to inject naphtha into the intake port 16 at the timing when the intake air greatly flows. Thus, a homogeneous air-fuel mixture rich in naphtha can be formed in the combustion chamber 14a.

The PCM 10 activates the ignition device 20 to cause ignition at a predetermined timing in the vicinity of the compression top dead center. In this way, the air-fuel mixture is forcibly combusted (step S5). Through such combustion, in the cold region, the three-way catalyst 41a can be quickly warmed while the air-fuel ratio is brought close to the substantially stoichiometric air-fuel ratio.

Here, the PCM 10 adjusts the ignition timing of the ignition device 20 based on the detection result of the water temperature sensor SW1. Specifically, the PCM 10 determines the temperature of the combustion chamber 14a based on the detection result of the water temperature sensor SW1, and retards the timing for activating the ignition device 20 as the temperature becomes lower.

Further, the PCM 10 determines the temperature of the three-way catalyst 41a based on the detection result of the exhaust temperature sensor SW12. In this example, the PCM 10 is configured to perform the processing shown in steps S3 to S5 until the three-way catalyst 41a is warmed up. However, the PCM 10 may determine whether the three-way catalyst 41a is in a half-warmed state or not based on the temperature of the three-way catalyst 41a, so that the PCM 10 may proceed to the processing shown in, e.g., steps S7 to S10 to be described later once a determination is made that the three-way catalyst 41a is not completely warmed up but has at least reached the half-warmed state.

Note that the processing related to the cold region is not executed after the diesel engine 1 is warmed up. That is, when the diesel engine 1 is temporarily stopped, e.g., for idle reduction, the processing related to other operating region is executed instead of the processing related to the cold region even when the engine is operated in a low load and low revolution region. In this case, the PCM 10 supplies naphtha or naphtha and the diesel fuel into the combustion chamber 14a in accordance with the operating state of the diesel engine 1, so that the exhaust gas discharged from the combustion chamber 14a has the stoichiometric air-fuel ratio.

When the operating region of the diesel engine 1 is determined to be the low load region (Yes is selected in step S6), the PCM 10 adjusts the combustion conditions to be suitable for the low load region.

The PCM 10 controls the opening degree of the EGR valve 51a to adjust the EGR rate to 40% (step S7). The PCM 10 controls the intake S-VT 71 to adjust the valve timing so that the intake valve 21 is closed at a predetermined delay closing timing (step S8). Then, the PCM 10 drives the naphtha injector 19 while maintaining the air-fuel ratio at the substantially stoichiometric air-fuel ratio (A/F = 14.5 to 15.0). The PCM 10 also performs control such that naphtha occupies the total amount of fuel, and injects naphtha into the intake port 16 at the timing when the intake air greatly flows in the intake stroke (step S9).

The PCM 10 drives the ignition device 20 to cause ignition at a predetermined timing in the vicinity of the compression top dead center. In this way, the air-fuel mixture is forcibly combusted (step S10).

When the operating region of the diesel engine 1 is determined to be the medium load region (Yes is selected in step S11), the PCM 10 adjusts the combustion conditions to be suitable for the medium load region.

The PCM 10 controls the opening degree of the EGR valve 51a to adjust the EGR rate to 40% (step S12). Then, the PCM 10 drives the naphtha injector 19 while maintaining the air-fuel ratio at the substantially stoichiometric air-fuel ratio. At this time, the PCM 10 also performs control such that naphtha occupies 95% of the total amount of fuel, and injects naphtha into the intake port 16 at the timing when the intake air greatly flows in the intake stroke (step S13).

Further, the PCM 10 drives the diesel fuel injector 18 while maintaining the air-fuel ratio at the substantially stoichiometric air-fuel ratio, performs control such that the diesel fuel occupies 5% of the total amount of fuel, and injects the diesel fuel directly into the combustion chamber 14a at a predetermined timing in the latter half of the compression stroke (step S14).

In this way, the air-fuel mixture causes self ignition, and is combusted in the vicinity of the compression top dead center. Therefore, the ignition device 20 does not cause ignition.

When the operating region of the diesel engine 1 is determined to be the high load region (No is selected in step S11), the PCM 10 adjusts the combustion conditions to be suitable for the high load region.

The PCM 10 controls the opening degree of the EGR valve 51a and adjusts the EGR rate between 30% and 0% (step S15). The higher the load is, the larger amount of air is required. Thus, the EGR rate is adjusted to be low. Then, the PCM 10 drives the naphtha injector 19 while maintaining the air-fuel ratio at the substantially stoichiometric air-fuel ratio. At this time, the PCM 10 also performs control such that naphtha occupies 95% of the total amount of fuel, and injects naphtha into the intake port 16 at the timing when the intake air greatly flows in the intake stroke (step S16).

Further, the PCM 10 drives the diesel fuel injector 18 while maintaining the air-fuel ratio at the substantially stoichiometric air-fuel ratio, performs control such that the diesel fuel occupies 5% of the total amount of fuel, and injects the diesel fuel directly into the combustion chamber 14a at a predetermined timing in the latter half of the compression stroke (step S17).

In this way, also in the high load region, the air-fuel mixture causes self ignition, and is combusted in the vicinity of the compression top dead center in the same manner as in the medium load region.

As described above, in the engine system, naphtha for generating the torque and the diesel fuel for the ignition are supplied to the diesel engine 1. The air-fuel mixture whose air-fuel ratio is approximate to the stoichiometric air-fuel ratio is formed throughout the combustion chamber 14a using naphtha which is excellent in vaporization performance, thereby reducing the generation of the soot and CO. In addition, with respect to the air-fuel mixture in the combustion chamber 14a, the weight ratio (A/F) between the fuel containing both naphtha and the diesel fuel and the air is set to be the substantially stoichiometric air-fuel ratio, and the air-fuel ratio of the exhaust gas discharged from the combustion chamber 14a is set to be the stoichiometric air-fuel ratio, thereby allowing the exhaust gas to be purified by the three-way catalyst 41a provided in the exhaust passage 40. A post-processing system for purifying NOₓ, which is required in the conventional diesel engine, can be omitted, thereby simplifying the engine system and reducing costs. In addition, in the above-described engine system, the air-fuel ratio of the air-fuel mixture is set to be the substantially stoichiometric air-fuel ratio. Thus, the engine torque can be enhanced, as compared with the conventional diesel engine in which the lean operation is performed.

Further, when the diesel engine 1 is cold, the engine system supplies only naphtha to the combustion chamber 14a, and assists ignition of the air-fuel mixture formed by naphtha as shown in FIG. 5. Since naphtha vaporizes relatively easily and forms a homogeneous air-fuel mixture in the combustion chamber 14a, the generation of, e.g., soot can be reduced. Reduction of the generation of the soot permits supply of a large amount of naphtha. Therefore, the air-fuel mixture can be rich in fuel, and thus, the diesel engine 1 can be quickly warmed up.

### <Specification Example and Verification Results>

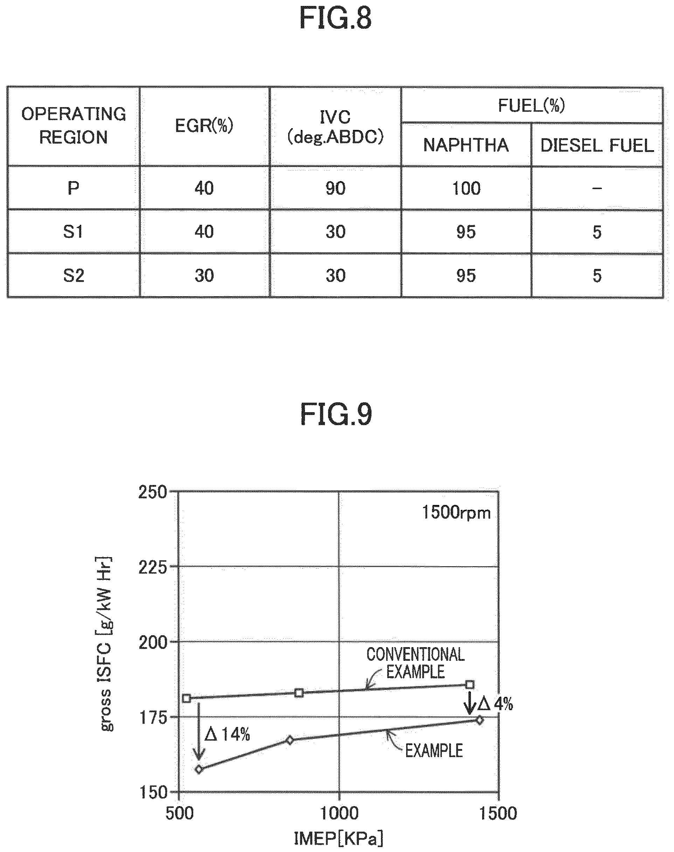

FIG. 8 shows an example of main specifications related to combustion control in the low load region (P region), the medium load region (S1 region), and the high load region (S2). The numerical values shown here are merely illustrative and can be changed in accordance with specifications. Each numerical value indicates a reference value and may include some variation in practice.

In the low load region, the EGR rate is set to 40%, and a relatively large amount of EGR gas is introduced into the combustion chamber 14a. Through the intake delayed closing control, the closing point of the intake valve 21 (IVC) is set at 90 CA degrees after the intake bottom dead center. Since the effective compression ratio decreases through the intake delayed closing control, stable compression ignition is made difficult. Accordingly, the ignition device 20 performs forcible ignition, and naphtha is solely used as the fuel because naphtha is inexpensive, allows a homogeneous air-fuel mixture to be formed, and is advantageous in reduction of emissions.

In the medium load region, the EGR rate is set to 40% which is the same as that in the low load region, and a relatively large amount of the EGR gas is introduced into the combustion chamber 14a. The closing point of the intake valve 21 (IVC) is reset to the reference setting, and is set at 30 CA degrees after the intake bottom dead center. Since stable compression ignition is possible, the ignition device 20 is not used, and combustion is carried out by the compression ignition. The stable compression ignition is performed by adding 5% diesel fuel to naphtha used as the main fuel. Since inert gas (the EGR gas) cooled by the EGR cooler 52 and having a relatively low temperature is introduced into the combustion chamber 14a, a steep rise of the combustion after the ignition of the air-fuel mixture is reduced, and an increase in combustion noise and an increase in a thermal load are reduced.

In the high load region, the EGR rate is set to 30%, and the amount of air is relatively increased in order to achieve efficient combustion. As in the medium load region, the closing point of the intake valve 21 (IVC) is set at 30 CA degrees after the intake bottom dead center, and stable compression ignition is possible. Accordingly, the combustion is carried out by the compression ignition. As in the medium load region, 5% diesel fuel and 95% naphtha are used as the fuel. Since the inert gas (EGR gas) cooled by the EGR cooler 52 and having a relatively low temperature is introduced into the combustion chamber 14a, premature ignition of the air-fuel mixture (naphtha) is substantially prevented, causing the ignition at a timing when high engine torque can be produced.

Further, even in a high speed region of the engine, the EGR rate is set to 30%, and the amount of air is relatively increased in order to achieve efficient combustion. The closing point of the intake valve 21 (IVC) is set at timing at which an intake filling amount can be increased in the high speed region, and is set at approximately 45 CA degrees after the intake bottom dead center. In the high speed region, an elapsed time of the crank angle from the intake stroke to the compression stroke is shortened, as compared with that in a low speed region. Thus, a period in which naphtha is supplied via the intake port 16 becomes long in terms of the crank angle, a time interval from the end of the supply of naphtha to a point near the compression top dead center becomes remarkably short, and a homogeneous mixture of the air and naphtha is less formed. However, recirculation of the EGR gas promotes the vaporization of naphtha, thereby reducing deterioration in homogenization, thereby generating no soot, and increasing the engine torque. Also in the high speed region, 5% diesel fuel and 95% naphtha are used. If optimum ignition timing cannot be obtained due to balance between an engine speed and the time interval from the supply of naphtha to the time in the vicinity of the compression top dead center, 100% naphtha may be supplied and forcible ignition may be performed by the ignition device 20.

As described above, in the high speed region, recirculation of the EGR gas is impossible because use of the diesel fuel as the main fuel increases the generation of soot. However, when naphtha is supplied as the main fuel, the recirculation of the EGR gas is effective.

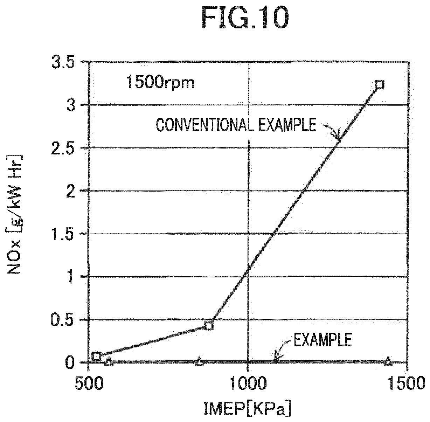

FIGS. 9 and 10 show the results of the verification. The verification was carried out by comparing an example of the engine system disclosed herein with a conventional example of the conventional diesel engine system. FIG. 8 illustrates the relationship between an indicated mean effective pressure (IMEP) and an indicated specific fuel consumption (gross ISFC) at a predetermined engine speed. As shown in FIG. 9, in the example, the air-fuel ratio of the air-fuel mixture is set to be substantially the stoichiometric air-fuel ratio. Thus, the indicated specific fuel consumption in each of the low load region, the medium load region, and the high load region is lower than that in the conventional example in which lean operation is performed. The engine system disclosed herein can further improve the engine torque and fuel economy performance, compared to a conventional diesel engine system.

FIG. 10 illustrates the relationship between an indicated mean effective pressure (IMEP) and the amount of NOx emission at a predetermined engine speed. In the conventional example, the amount of NOₓ emission from the combustion chamber increases with the increase in engine load. In the example, the amount of NOₓ emission in a tail pipe disposed downstream of the three-way catalyst 41a is shown. In this example, the amount of NOₓ emission is substantially zero because the air-fuel ratio of the exhaust gas discharged from the combustion chamber 14a is set to be the stoichiometric air-fuel ratio, and NOₓ is purified by the three-way catalyst 41a. That is, in the engine system disclosed herein, emission performance is further enhanced, as compared with the conventional diesel engine system.

Since naphtha is lower in manufacturing cost and more inexpensive than the diesel fuel and gasoline, the present engine system using naphtha is economic.

The present disclosure disclosed herein is not limited to the above-described configuration. It has been described in the above configuration that the air-fuel mixture has the substantially stoichiometric air-fuel ratio throughout the whole operating region of the diesel engine 1. However, for example, the air-fuel ratio of the air-fuel mixture may be significantly more fuel-lean than the stoichiometric air-fuel ratio (e.g., A/F = 30 to 45) in, for example, the low or light load region where the total fuel injection amount is small. Setting the air-fuel ratio to approximately 30 to 45 can reduce the generation of NOₓ in the combustion chamber 14a.

In addition, when the diesel engine 1 is in a specific operating state, naphtha may be solely supplied to the diesel engine 1. In this case, the air-fuel mixture is lowered in ignitability, and thus, the air-fuel mixture may be forcibly ignited by the ignition device 20.

It has been shown in the above configuration that the temperature of the engine coolant is used as a parameter related to the temperature of the diesel engine 1. However, this configuration is not limiting. For example, oil temperature of the diesel engine 1 may be used.

Although the turbosupercharger 61 is mounted in the above-described configuration, the configuration does not necessarily include the turbosupercharger. Specifically, the conventional diesel engine needs to mount the supercharger in order to make the air-fuel ratio upon the combustion lean, thereby reducing the soot and CO, and further needs to use the high-cost selective reduction catalyst in order to reduce NOₓ. Alternatively, the conventional diesel engine needs to mount a plurality of superchargers in order to significantly increase a supercharging pressure, thereby making the air-fuel ratio upon the combustion significantly lean, and further needs to decrease a compression ratio of an engine body and to decrease a combustion temperature, thereby reducing the soot, CO, and NOₓ. In the present disclosure, supplying the first fuel can make the air-fuel ratio of the exhaust gas stoichiometric. Thus, use of the three-way catalyst 41a in combination can reduce the soot and CO, and sufficiently purify NOₓ, without relying on the supercharging. Therefore, the present disclosure can provide an inexpensive engine with no supercharger.

### DESCRIPTION OF REFERENCE CHARACTERS

- 1: Diesel Engine (Engine Body)
- 10: PCM (Controller)
- 14a: Combustion Chamber
- 18: Diesel Fuel Injector (Second Fuel Supply)
- 19: Naphtha Injector (First Fuel Supply)
- 20: Ignition Device (Ignition Assist Device)
- 40: Exhaust Passage
- 41a: Three-way Catalyst (Catalytic Device)
- SW1: Water Temperature Sensor (Sensor)

## Claims

1. A compression ignition engine comprising:
an engine body having a combustion chamber;
a first fuel supply configured to supply first fuel to the combustion chamber;
a second fuel supply configured to supply second fuel to the combustion chamber, the second fuel less easily vaporizing than the first fuel, at least one of a pressure or temperature of the second fuel at which compression ignition is initiated being lower than that of the first fuel;
an ignition assist device configured to assist ignition of an air-fuel mixture formed by at least one of the first fuel or the second fuel; and
a controller configured to output a control signal to each of the first fuel supply, the second fuel supply, and the ignition assist device, wherein
the controller determines
whether the engine body is cold and not warmed up yet or has been warmed up, and
the controller outputs a control signal to the ignition assist device so that the ignition assist device assists ignition of the air-fuel mixture formed by the first fuel when the engine body is cold.

2. The compression ignition engine of claim 1, wherein
the first fuel has a lower boiling point than the second fuel.

3. The compression ignition engine of claim 1 or 2, wherein
when only the first fuel is supplied, the controller outputs a control signal to the first fuel supply such that the first fuel is supplied to, and combusted in, the combustion chamber, thereby making an air-fuel ratio of exhaust gas discharged from the combustion chamber equal to or less than 15.0.

4. The compression ignition engine of any one of claims 1 to 3, further comprising:
a sensor connected to the controller, and configured to detect a parameter related to a temperature of the engine body, wherein
when the temperature of the engine body is low, the controller outputs a control signal to the ignition assist device to retard timing for assisting the ignition behind timing for assisting the ignition when the temperature of the engine body is high.

5. The compression ignition engine of any one of claims 1 to 4, further comprising:
a catalytic device configured to purify exhaust gas discharged from the combustion chamber, wherein
the controller determines whether the catalytic device is in a predetermined half-warmed state, and
the controller outputs a control signal to the first fuel supply and the ignition assist device to supply the first fuel only, and to assist the ignition of the air-fuel mixture formed by the first fuel, until the catalytic device is at least warmed up to the half-warmed state.

6. The compression ignition engine of any one of claims 1 to 5, wherein
a three-way catalyst as a catalytic device for purifying exhaust gas discharged from the combustion chamber is disposed in an exhaust passage of the engine body, and
after the engine body is warmed up, the controller outputs a control signal to the first fuel supply or the first and second fuel supplies so that the first fuel or the first and second fuels is/are supplied to, and combusted in, the combustion chamber, thereby causing an air-fuel ratio of exhaust gas upstream of the three-way catalyst in the exhaust passage to be a stoichiometric air-fuel ratio.

7. The compression ignition engine of any one of claims 1 to 6, wherein
the first fuel includes naphtha, and the second fuel includes diesel fuel.

8. The compression ignition engine of any one of claims 1 to 6, wherein
the first fuel includes gasoline, and the second fuel includes diesel fuel.
